# EUROPEAN PATENT APPLICATION

(11) **EP 2 354 612 A2**
(43) Date of publication of application: **10.08.2011**
(21) Application number: 11153183.6
(22) Date of filing: 03.02.2011
(51) Int. Cl.: F16L 9/02

(54) **Threaded metal pipe**

(30) Priority: 09.02.2010 US 702340
(71) Applicant: General Electric Company, Schenectady, NY 12345 (US)
(72) Inventor: Carter, William Thomas, Niskayuna, NY 12309 (US)
(74) Representative: Illingworth-Law, William Illingworth

(57) **Abstract**

A threaded metal pipe (10) is provided which comprises a metal pipe having an inner surface (20), an outer surface (25), a first end portion (26) and a second end portion (28); a metal sleeve layer (30) disposed on an outer surface of at least one of the first end portion (26) and the second end portion (28), said metal sleeve layer (30) and said end portion forming a multilayer structure (32) having an inner surface and an outer surface; and a plurality of pipe threads (40) inscribed in at least a portion of the multilayer structure (32).

## Description

The present invention relates to threaded metal pipes and methods for their manufacture. More particularly, the invention relates to threaded metal pipes formed by thickening the end portions of the pipe by one of several metal deposition techniques which eliminate reliance on conventional pipe upset processes.

### BACKGROUND

The production of threaded metal pipe is known to rely on conventional metal pipe end-thickening processes such as "upset" forging wherein the metal pipe wall thickness in an end portion of the pipe is increased by applying compressive forces sufficient to shorten the length of the end portion of the pipe. Upset forging of metal pipe is energy intensive and has a number of serious limitations including mechanical problems such as buckling in the pipe sidewall during the upsetting process.

While conventional upset forging enables the production of threaded metal pipes in which the pipe threads may be inscribed into a thickened pipe end portion such that the threaded portions of the pipe are at least as thick as the pipe wall thickness along the length of the pipe in un-thickened sections of the pipe. It is advantageous to minimize wall thicknesses over and above those thicknesses required for a given application. Upset forging enables designers to minimize the thickness of the pipe along its entire length, because the pipe walls need not be thickened to compensate for the loss of wall thickness due to pipe threading. In conventional threaded pipes, the wall thickness of the starting metal pipe which is to be threaded is typically greater than the minimum thickness required for a given application, in order to allow the threading of the pipe without sacrificing the structural integrity of the product threaded pipe in its threaded zones. As noted, however, Upset forging, despite its being a well developed technique, poses both financial and technical challenges to practitioners.

Thus, there remains a need for new, more efficient, methods of preparing threaded metal pipe. As is disclosed in detail herein, the present invention enables the use of thinner-walled metal pipes and a variety of advantages follow, such as reduced cost and enhanced ease of handling.

### BRIEF DESCRIPTION

In accordance with one aspect of the present invention, a threaded metal pipe is provided that includes a metal pipe having an inner surface, an outer surface, a first end portion and a second end portion; a metal sleeve layer disposed on an outer surface at least one of the first end portion and the second end portion, said metal sleeve layer and said end portion forming a multilayer structure having an inner surface and an outer surface; and a plurality of pipe threads inscribed in at least a portion of the multilayer structure.

In accordance with another aspect of the present invention, a petroleum production riser is provided that includes at least one riser section comprising a metal pipe having an inner surface, an outer surface, a first end portion and a second end portion; a metal sleeve layer disposed on an outer surface at least one of the first end portion and the second end portion, said metal sleeve layer and said end portion forming a multilayer structure having an inner surface and an outer surface; and a plurality of pipe threads inscribed in at least a portion of the multilayer structure.

In accordance with another aspect of the present invention, a threaded pin coupling is provided that includes a first end portion of a metal pipe having an inner surface, and an outer surface; a metal sleeve layer disposed on the outer surface of the first end portion, said metal sleeve layer and said end portion forming a multilayer structure having an inner surface and an outer surface; and a plurality of pipe threads inscribed in at least a portion of the outer surface of the multilayer structure

In accordance with another aspect of the present invention, a threaded box coupling is provided that includes a first end portion of a metal pipe having an inner surface, and an outer surface; a metal sleeve layer disposed on the outer surface of the first end portion, said metal sleeve layer and said end portion forming a multilayer structure having an inner surface and an outer surface; and a plurality of pipe threads inscribed in at least a portion of the inner surface of the multilayer structure.

In accordance with another aspect of the present invention, a method of making a threaded metal pipe is provided that includes (a) providing a metal pipe having an inner surface, an outer surface, a first end portion and a second end portion; (b) disposing a metal sleeve layer on an outer surface at least one of the first end portion and the second end portion, said metal sleeve layer and said end portion forming a multilayer structure having an inner surface and an outer surface; and (c) inscribing a plurality of pipe threads in at least a portion of the multilayer structure.

### BRIEF DESCRIPTION OF THE DRAWING FIGURES

These and other features, aspects, and advantages of the present invention will become better understood when the following detailed description is read with reference to the accompanying drawings in which like characters represent like parts throughout the drawings, wherein:
Fig. 1 illustrates an embodiment of the present invention which is a threaded metal pipe;
Fig. 2 illustrates key concepts and embodiments of the present invention;
Fig. 3 illustrates key concepts and embodiments of the present invention;
Fig. 4 illustrates key concepts and embodiments of the present invention;
Fig. 5 illustrates a method provided by the present invention;
Fig. 6 illustrates a threaded pin coupling provided by the present invention;
Fig. 7 illustrates a threaded box coupling provided by the present invention; and
Fig. 8 illustrates a threaded pin coupling provided by the present invention coupled with a threaded box coupling provided by the present invention.

### DETAILED DESCRIPTION

In the following specification and the claims, which follow, reference will be made to a number of terms, which shall be defined to have the following meanings.

The singular forms "a", "an", and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As noted, in one embodiment, the present invention provides a threaded metal pipe comprising a metal pipe having an inner surface, an outer surface, a first end portion and a second end portion; a metal sleeve layer disposed on an outer surface of at least one of the first end portion and the second end portion, said metal sleeve layer and said end portion forming a multilayer structure having an inner surface and an outer surface; and a plurality of pipe threads inscribed in at least a portion of the multilayer structure.

The threaded metal pipe provided by the present invention offers a number of advantages over threaded metal pipes known in the art. For example, in one embodiment, the present invention provides threaded metal pipes which when connected together form pipe joints having constant inner diameter through the joint region, for example the region of overlap between a threaded pin coupling of the invention coupled to a threaded box coupling of the invention.

In another aspect, the present invention eliminates reliance on conventional metal pipe end-thickening processes such as "upset" forging wherein the metal pipe wall thickness at an end portion is increased by applying compressive forces sufficient to shorten the length of the pipe. As noted earlier herein, upset forging of metal pipe is energy intensive and has a number of serious limitations including mechanical problems such as buckling in the pipe sidewall during the upsetting process.

In one aspect, the present invention represents an advance over conventional techniques in that pipe wall thickness can be kept to a minimum thereby reducing both the cost and weight of the threaded metal pipe. In conventional threaded pipes, the wall thickness of the starting metal pipe which is to be threaded is typically greater than the minimum thickness required for a given application in order to allow the threading of the pipe without sacrificing the structural integrity of the product threaded pipe. In some embodiments of the present invention, none of the starting metal pipe is lost during the threading process. This is the case when the pipe threads are inscribed in the outer surface of the multilayer structure. In embodiments of the present invention in which the pipe threads are inscribed in the inner surface of the multilayer structure the portion of the metal pipe lost to thread creation is offset by the metal sleeve layer. Thus the present invention enables the use of thinner-walled metal pipes and a variety of advantages follow, such as reduced cost and enhanced ease of handling.

As will be appreciated by those of ordinary skill in the art, the threaded metal pipes provided by the present invention may be of almost any size. For example, threaded metal pipes provided by the present invention include large threaded metal pipes which may be used to transport municipal water supplies, and small laboratory scale threaded metal pipes which may be used for gas distribution and supply as in a gas chromatograph. In one embodiment, the present invention provides a threaded metal pipe which may be used as a riser section in a petroleum production riser.

While, typically, the threaded metal pipes provided by the present invention are threaded at each of the ends of the pipe, in certain embodiments, the threaded metal pipe provided by the present invention is threaded at one end only.

The invention may be better understood by those of ordinary skill in the art by considering how the threaded metal pipes of the present invention may be prepared. Thus, in one embodiment, a metal pipe having pipe inner diameter, a pipe outer diameter, a pipe inner surface and a pipe outer surface, a first end portion and a second end portion is provided as a point of departure. A metal sleeve layer is disposed on the pipe outer surface of the first end portion and/or second end portion to provide a thickened metal pipe, the thickened portion of the pipe being referred to as a multilayer structure, the multilayer structure comprising the end portion (first or second) and the metal sleeve disposed upon the end portion. The term "thickened metal pipe" is used as a term of convenience since when the pipe is of uniform dimensions along it's length, the first end portion and the second end portion are thicker than the pipe in other points along the length of the pipe owing to the presence of the metal sleeve layer. This condition is not required however and, in certain embodiments, the pipe may be of irregular dimensions such that at one or more points the pipe itself is thicker than the multilayer structure. Typically, however, the metal pipe upon which the metal sleeve layer is deposited is a metal pipe having, to the extent commercially practicable, a uniform wall thickness and the multilayer structure is thicker than the wall thickness of the pipe itself at any point along the length of the pipe. The thickness of the metal sleeve layer may vary across the length of the end portion of the pipe as well, but the metal sleeve layer is typically of uniform thickness as measured from the pipe outer surface at a given distance from the end of the pipe within the first end portion and/or second end portion. Because of this, it is convenient to characterize the metal sleeve layer in terms of a thickness of the metal sleeve layer at its thickest point as measured from the outer surface of the metal pipe through the metal sleeve layer to the outer surface of the metal sleeve layer along a line perpendicular to the surface of the metal pipe. Typically the thickness of the metal sleeve layer at its thickest point corresponds to about 0.1 percent to about 1000 percent of the wall thickness of the metal pipe itself. In one embodiment, the metal sleeve layer at its thickest point corresponds to about 1 percent of the wall thickness of the metal pipe itself. In an alternate embodiment, the metal sleeve layer at its thickest point corresponds to about 10 percent of the wall thickness of the metal pipe itself. In an alternate embodiment, the metal sleeve layer at its thickest point corresponds to about 50 percent of the wall thickness of the metal pipe itself. In an alternate embodiment, the metal sleeve layer at its thickest point corresponds to about 100 percent of the wall thickness of the metal pipe itself. In an alternate embodiment, the metal sleeve layer at its thickest point corresponds to about 500 percent of the wall thickness of the metal pipe itself.

As noted, in preparing the threaded metal pipe provided by the present invention, pipe threads are inscribed into a surface of the multilayer structure adjacent to the end of the pipe to form a threaded pipe comprising either a threaded pin coupling (sometimes referred to in the art as a male coupling) or a threaded box coupling (sometimes referred to in the art as a female coupling). A threaded pin coupling results when the pipe threads are inscribed into the outer surface of the multilayer structure. A threaded box coupling results when the pipe threads are inscribed into the inner surface of the multilayer structure. The metal sleeve layer should be sufficiently thick such that when the pipe threads are inscribed into the inner surface of the multilayer structure the structural integrity of the threaded metal pipe is not compromised despite the fact that a significant portion of the pipe wall, or even the entire pipe wall within the multilayer structure may be removed as the pipe threads are inscribed into the multilayer structure. Similarly, the metal sleeve layer should be sufficiently thick such that when the pipe threads are inscribed into the outer surface of the multilayer structure the structural integrity of the resultant threaded metal pipe is not compromised due to attrition of the pipe outer surface supporting the metal sleeve layer. In one embodiment, no significant attrition of the pipe outer surface supporting the metal sleeve layer occurs when the pipe threads are inscribed into the outer surface of the multilayer structure.

Pipe threads may be inscribed into the inner surface of the multilayer structure and or the outer surface of the multilayer structure using conventional pipe threading techniques. The pipe threads may be of any known type. In one embodiment, the pipe threads may comprise cylindrical thread sections. In another embodiment, the pipe threads are tapered. In one embodiment, the pipe threads are adapted for use in dry fit and/or dry seal couplings. In an alternate embodiment, the pipe threads are adapted for use in couplings, and a sealant, such as a thread coating, a gasket, or a threaded seal tape are used to couple the threaded metal pipe to an appropriate complimentary coupling type.

The metal sleeve layer is advantageously bound to the pipe outer surface within the first end portion and/or the second end portion of the metal pipe through a metallurgical bond between the metal sleeve layer and the pipe outer surface. The metal sleeve layer may be created using, for example, metal deposition processes such as those processes disclosed in United States patents 5143139 and 4926923 which references are hereby incorporated by reference in their entirety. In the event that a term or definition in either of United States patents 5143139 and 4926923 conflicts with the instant application, the instant application will be taken as authoritative with respect to the point of conflict. Suitable metal deposition processes include spray deposition processes such as spray forming, nucleated casting, plasma spray, cold spray; welding processes including TIG welding, MIG welding electron-beam welding, laser welding, plasma arc welding, resistance projection welding, friction welding, and the like.

In one embodiment, the metal sleeve layer is deposited on the outer surface of the first end portion of the starting metal pipe via a metal deposition process in which the outer surface of the first end portion is heated and rotated relative to a spray nozzle while a stream of atomized metal is directed from the spray nozzle onto the outer surface of the first end portion. As the preceding sentence suggests, the outer surface of the first end portion may be rotated relative to the spray nozzle either by rotating the pipe relative to a fixed spray nozzle; or by rotating the spray nozzle relative to a fixed pipe; or yet by simultaneously rotating both the spray nozzle and the pipe, for example by counter-rotating the spray nozzle and the pipe at rates of revolution appropriate to effect a substantially uniform distribution of the metal sleeve layer on the outer surface of the first end portion. In one embodiment, a metal sleeve layer is deposited on both the first end portion and the second end portion via a metal deposition process in which the outer surfaces of the first end portion and second end portion are heated and rotated while a stream of atomized metal is directed onto the outer surface of the first and/or second end portion.

The following exemplifies a deposition process which may be used to prepare a thickened metal pipe having a metal sleeve layer deposited on either or both of the first end portion and second end portion of the metal pipe. Thus starting with conventional metal pipe (Grade Q125, 16 inch Schedule 120 pipe steel pipe), the end portion of the metal pipe is prepared by grit blasting or machining to remove any paint, scale or rust, exposing clean metal. A mask is applied to cover that part of the pipe that will not receive the metal sleeve layer. This mask may be a layer of alumina, boron nitride, or a sleeve made from a larger-diameter pipe. The purpose of the mask is to allow easy removal of overspray from the pipe of interest after deposition. The pipe is mounted on a suitable structure to allow rotation of the pipe inside a spray forming chamber. Rotational rates of about 60 RPM are typical. The end portion of the pipe is heated to a suitable temperature, for example 1400°C, using any suitable means such as an induction coil or a plasma torch. A liquid metal source may be provided by melting metal having the desired chemistry in a conventional furnace such as an induction melting furnace or an electric arc furnace. The liquid metal is conveyed to the spray forming chamber and poured into a heated funnel to form a stream of liquid metal that flows into the spray forming chamber at a constant pour rate, for example from about 5 to about 200 pounds per minute. A constant pour rate may be achieved by controlling the height of liquid metal in the tundish of the spray forming apparatus used, or by controlling the pressure difference above and below the tundish, or both. After entering the spray forming chamber, the liquid metal falls immediately through a gas atomizer to convert the stream of molten metal into a spray of liquid metal droplets. The atomizer is an annular array of inward and downward directed gas jets which intersect the metal stream at an atomization zone. Nitrogen may serve as the atomization gas which is used to produce the spray of liquid metal droplets in the atomization zone. The mass flow rate of the atomization gas is typically approximately equal to the mass flow rate of liquid metal into the atomization zone, but in certain protocols the mass flow rate of the atomization gas may differ from the mass flow rate of liquid metal into the atomization zone by a factor of about 5. The gas-to-metal flow ratio is a key process control variable. High gas flow rates may result cooler metal deposition temperatures. The atomizer may be manipulated to direct the spray onto the surface of the end portion of the pipe onto which the metal sleeve layer is being deposited. For example, the atomizer may be rocked through an angle of +/- 15° at a rate of 1 to 30 Hz to distribute the metal spray over a relatively larger area. In one embodiment, the metal spray travels a distance ranging from about 10 inches to about 50 inches before encountering the surface of the metal pipe end portion being coated. It is believed that the metal droplets accelerate as the atomization gas decelerates, and that the relative velocities of the gas and metal droplets may be used to control the rates of convective cooling of the metal droplets. In one embodiment, the droplets impinge on the rotating pipe creating a uniform deposit ranging in thickness from about one quarter of an inch to about two inches over a length of the end portion of the pipe, which end portion is from about twelve to about sixteen inches long. In one embodiment, the metal droplets will have lost approximately fifty percent their heat by the time contact is made with the outer surface of the metal pipe. It is believed that smaller droplets may freeze in flight while larger droplets will retain more heat and tend to remain in at least a partially liquid state during flight from the atomization zone to the surface of the metal pipe being coated. In certain embodiments, the atomized metal spray will include a large number of finely distributed solidified particles. After deposition, these particles may serve as nucleation sites for further solidification, and may grow as liquid metal on the surface of the metal pipe solidifies. In certain embodiments, a beneficial finegrained metallurgical structure results. After deposition, the thickened metal pipe is removed from the spray forming chamber and is allowed to cool. and the mask is removed. The pipe is conveyed to a heat treatment facility for conventional quench and temper heat treatment followed by threading.

Heating the outer surface of the metal pipe while disposing the metal sleeve layer using a metal deposition process promotes the formation of a metallurgical bond between the metal sleeve layer and the outer surface of the pipe. In one embodiment, the outer surface of the first and/or second end portion of the metal pipe is heated to a temperature in a range from about 200°C to about 1500° while disposing the metal sleeve layer on the outer surface of the first and/or second end portion of the metal pipe. In an alternate embodiment, the outer surface of the first and/or second end portion of the metal pipe is heated to a temperature in a range from about 900°C to about 1400° while disposing the metal sleeve layer on the outer surface of the first and/or second end portion of the metal pipe. In another embodiment, the outer surface of the first and/or second end portion of the metal pipe is heated to a temperature in a range from about 1100°C to about 1500° while disposing the metal sleeve layer on the outer surface of the first and/or second end portion of the metal pipe. In yet another embodiment, the outer surface of the first and/or second end portion of the metal pipe is heated to a temperature in a range from about 1200°C to about 1400° while disposing the metal sleeve layer on the outer surface of the first and/or second end portion of the metal pipe.

In one embodiment, the metal sleeve layer is disposed upon the outer surface of the first and/or second end portion of the metal pipe by shrink fitting a metal sleeve onto the first and/or second end portion. Thus, a suitable metal sleeve is heated to a temperature such that it can be slid over the first and/or second end portions of the starting metal pipe. As the sleeve cools it contracts and becomes mechanically bound to the metal pipe. Heat treatment of the resultant multilayer structure can effect the formation of an additional metallurgical bond between the outer surface of the metal pipe and the metal sleeve layer within the first end portion and/or the second end portion of the metal pipe. In one embodiment, the multilayer structure obtained by shrink fitting a metal sleeve onto the first and/or second end portion is subjected to heat treatment at temperature in a range from about 300°C to about 1200°C to form a metallurgical bond between the outer surface of the metal pipe and the metal sleeve layer components of the multilayer structure. In an alternate embodiment, the multilayer structure obtained by shrink fitting a metal sleeve onto the first and/or second end portion is subjected to heat treatment at temperature in a range from about 400°C to about 800°C to form a metallurgical bond between the outer surface of the metal pipe and the metal sleeve layer components of the multilayer structure. In yet another embodiment, the multilayer structure obtained by shrink fitting a metal sleeve onto the first and/or second end portion is subjected to heat treatment at temperature in a range from about 500°C to about 600°C to form a metallurgical bond between the outer surface of the metal pipe and the metal sleeve layer components of the multilayer structure.

As will be appreciated by those of ordinary skill in the art the metal pipe and the metal sleeve layer can comprise a very wide array of metal compositions which can be tailored to a particular application. In one embodiment, the metal pipe comprises at least one metal selected from the group consisting of aluminum, copper, iron, nickel, titanium, and metal alloys comprising one or more of the foregoing metals. Suitable examples of metal pipes which may be employed include seamless casings and tubing as described in the American Petroleum Institute Specification 5CT, which describes required properties and standard dimensions for a wide variety of metal pipe.

The metal sleeve layer may in some instances have the same chemical composition as the metal pipe, but in general, the metal sleeve layer has a chemical composition different from the chemical composition of the metal pipe surface upon which it is disposed. In one embodiment, the metal sleeve layer comprises at least one metal selected from the group consisting of aluminum, copper, iron, nickel, titanium, and metal alloys comprising one or more of the foregoing metals. Suitable examples of metal sleeve layers which may be employed include steel, stainless steel, high strength steel, nickel-base superalloys ( also referred to as nickel superalloys), or cobalt-based superalloys (also referred to as cobalt superalloys).

For example, the metal sleeve layer may comprise a superalloy material, for example a cobalt superalloy. In one embodiment, the metal sleeve layer comprises superalloy comprising from about 40 to about 70 weight percent cobalt based on total weight of the superalloy. The use of cobalt superalloy steels as the metal sleeve layer advantageously provides threaded metal pipes having threaded sections (threaded pin couplings and/or threaded box couplings) which are especially resistant to corrosion and wear, with high tensile strength combined with excellent impact toughness and ductility. Suitable cobalt superalloys include the cobalt superalloy steel sold by Haynes International Corporation under the trade names ULTIMET® and comprising about 54 weight percent cobalt, about 26 weight percent chromium, about 9 weight percent nickel, about 5 weight percent molybdenum, about 3 weight percent iron, about 2 weight percent tungsten, about 0.8 weight percent manganese, about 0.3 weight percent silicon, about 0.8 weight percent nitrogen, and about 0.06 weight percent carbon based on the total weight of the cobalt superalloy steel. Other suitable cobalt superalloy steels include HAYNES™ 6B, comprising about 51 weight percent cobalt, about 10 weight percent nickel, about 20 weight percent chromium, about 15 weight percent tungsten, about 3 weight percent iron, about 1.5 weight percent manganese, about 0.4 weight percent silicon, and about 0.10 weight percent carbon based on total weight of the cobalt superalloy steel, and chrome coatings sold by Armoloy Corporation under the trade name ARMOLOY®. ULTIMET® and HAYNES™ 6B alloys comprise primarily cobalt, chromium, and nickel. These cobalt superalloys exhibit outstanding tribological characteristics that may provide advantages during coupling together of threaded metal pipe sections while at the same time additional corrosion resistance in the coupling portions of the pipe.

In an alternate embodiment, the metal sleeve layer comprises a nickel-cobalt alloy (such as the MP35N alloy) which has excellent hardness and corrosion resistance characteristics.

In an alternate embodiment, the metal sleeve layer comprises a nickel alloy comprising from about 40 to about 70 percent nickel based on total weight of the nickel alloy. In one embodiment, the metal sleeve layer comprises a nickel alloy comprising about 58 weight percent nickel, about 21.5 weight percent chromium, about 9 weight percent molybdenum, and about 5 weight percent iron based on total weight of the nickel alloy.

In an alternate embodiment, the metal sleeve layer comprises a stainless steel alloy comprising from about 5 to about 27 weight percent chromium, from 0 to about 22 weight percent nickel and from 0 to about 5 weight percent molybdenum with the balance of the stainless steel alloy being carbon and iron. Suitable stainless steel alloys include ALLOY 304, which is the most widely used and versatile stainless steel containing and contains about 0.08% carbon, from about 17 to about 19% chromium, and from about 8 to about 11% nickel, with the balance being iron.

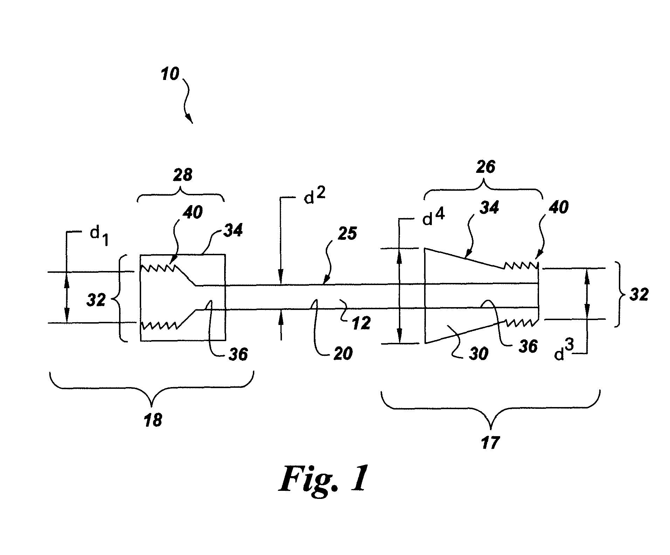

Referring to the drawings, FIG. 1 illustrates an embodiment of the present invention which is a threaded metal pipe 10 having a threaded pin coupling 17 at one end and a threaded box coupling 18 at the other. The threaded metal pipe 10 comprises a metal pipe 12 having a pipe inner surface 20 and a pipe outer surface 25, a first end portion 26 and a second end portion 28. The threaded metal pipe 10 comprises a metal sleeve layer 30 disposed on each of the first end portion 26 and the second end portion 28, the metal sleeve layers 30 and the end portions forming multilayer structures 32 having outer surfaces 34 inner surfaces 36. The threaded metal pipe 10 comprises a plurality of pipe threads 40 inscribed in the outer surface 34 of the multilayer structure 32 of the first end portion 26. In the figure, the threads 40 are shown as inscribed only in the metal sleeve layer portion of the multilayer structure 32 of first end portion 26. In another embodiment, the threads 40 may be inscribed in both the metal sleeve layer portion and the metal pipe portion of the multilayer structure 32 of first end portion 26. In the figure, the threaded metal pipe 10 comprises a plurality of pipe threads 40 inscribed in the inner surface 36 of the multilayer structure 32 of the second end portion 28. As can be seen from the figure, the pipe threads 40 have been inscribed in the inner surface 36 of the multilayer structure 32 of the second end portion 28 in such a way that in the region of the threads 40, substantially all of the pipe 12 has been removed. In the figure, the threaded metal pipe 10 is shown as having an inner diameter d¹ of the threaded box coupling 18, a pipe inner diameter d² (the diameter of the original pipe 12 used to make the threaded metal pipe 10), a diameter d³ of the threaded pin coupling 17, and a diameter d⁴ representing the diameter of the multilayer structure of the first end portion 26 at its maximum thickness.

In one embodiment, diameters d¹ and d³ are complementary such that threaded pin coupling 17 may be coupled to threaded box coupling 18. In an alternate embodiment, diameters d¹ and d³ are non-complementary. In one embodiment, the plurality of pipe threads 40 are inscribed in a portion of the multilayer structure such that an inner diameter defined by the plurality of pipe threads d¹ is greater than an inner diameter d² of the metal pipe. In an alternate embodiment, plurality of pipe threads are inscribed in a portion of the multilayer structure such that an outer diameter defined by the plurality of pipe threads d³ is less than a maximum outer diameter d⁴ of the multilayer structure.

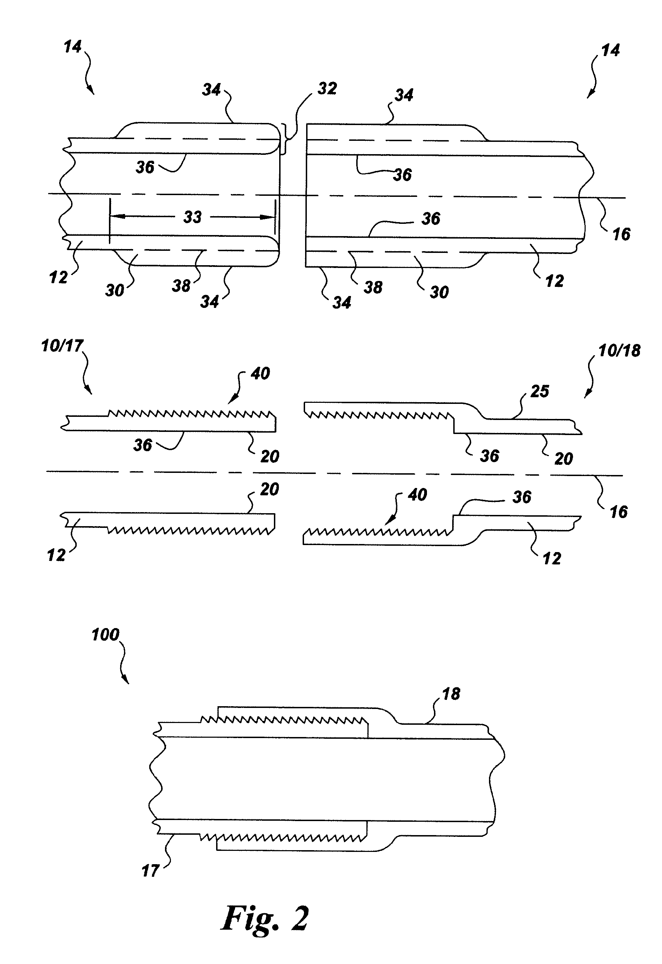

Referring to the drawings, FIG. 2 illustrates key concepts and embodiments of the threaded metal pipe 10 provided by the present invention. The figure illustrates the ends of two thickened metal pipes 14 each thickened metal pipe comprising a metal pipe 12 which together with metal sleeve layer 30 forms multilayer structure 32. For clarity, metal pipes 12 are shown as having inner surfaces 20, outer surfaces 25 and pipe center axes 16. The multilayer structure 32 has an outer surface of the multilayer structure 34 and an inner surface of the multilayer structure 36. The multilayer structure 32 us characterized by a length 33. In addition, the multilayer structure comprises a metallurgical bond 38 between the metal pipe 12 and the metal sleeve layer 30 which enhances the structural integrity of the multilayer structure.

Next, the figure illustrates a pair of complementary threaded metal pipes 10, one threaded metal pipe being configured with a threaded pin coupling 17 and the other with a threaded box coupling 18. As illustrated in the figure, a plurality of pipe threads 40 has been inscribed into the outer surface 34 of the multilayer structure 32 to create the threaded pin coupling 17, whereas the plurality of pipe threads 40 is inscribed into only a portion of the inner surface 36 of multilayer structure 32 to create threaded box coupling 18. Thus the threaded box coupling 18 is shown as comprising portions of the inner (36) and outer (34) surfaces of the multilayer structure 32 of thickened metal pipe 14.

Next, the figure illustrates a pipe connection 100 comprising a threaded pin coupling 17 coupled with a threaded box coupling 18.

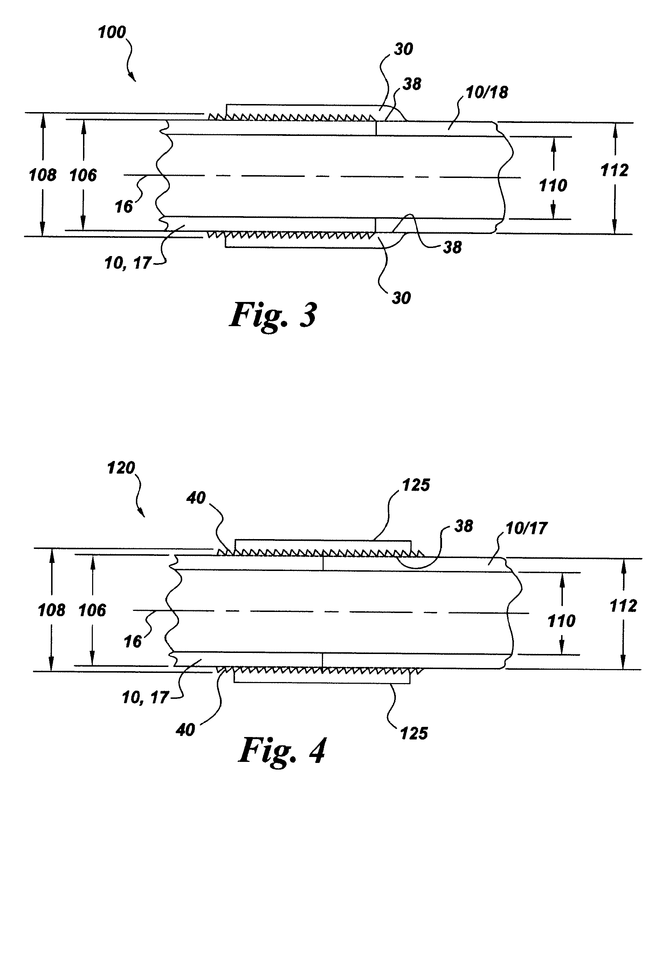

Referring to the drawings, FIG. 3 illustrates key concepts and embodiments of the threaded metal pipe 10 provided by the present invention. The figure illustrates a pipe connection 100 between a pair of threaded metal pipes 10 provided by the present invention, one threaded metal pipe comprising a threaded pin coupling 17, the other threaded metal pipe comprising a threaded box coupling 18. The pair of threaded metal pipes 10 is shown as aligned along pipe center axis 16. Metal sleeve layer 30 is shown as bound by a metallurgical bond 38 to metal pipe 12 having a pipe inner diameter 110 and a pipe outer diameter 112. The pipe connection comprising a pin coupling coupled with a box coupling is characterized by a minor diameter 106 and a major diameter 108.

Referring to the drawings, FIG. 4 illustrates key concepts and embodiments of the threaded metal pipe 10 provided by the present invention. The figure illustrates a pipe connection provided by the present invention in which a pair of threaded metal pipes 10 each comprising a threaded pin coupling 17 is aligned along a pipe center axis 16 and coupled together with a conventional pipe connector 125.

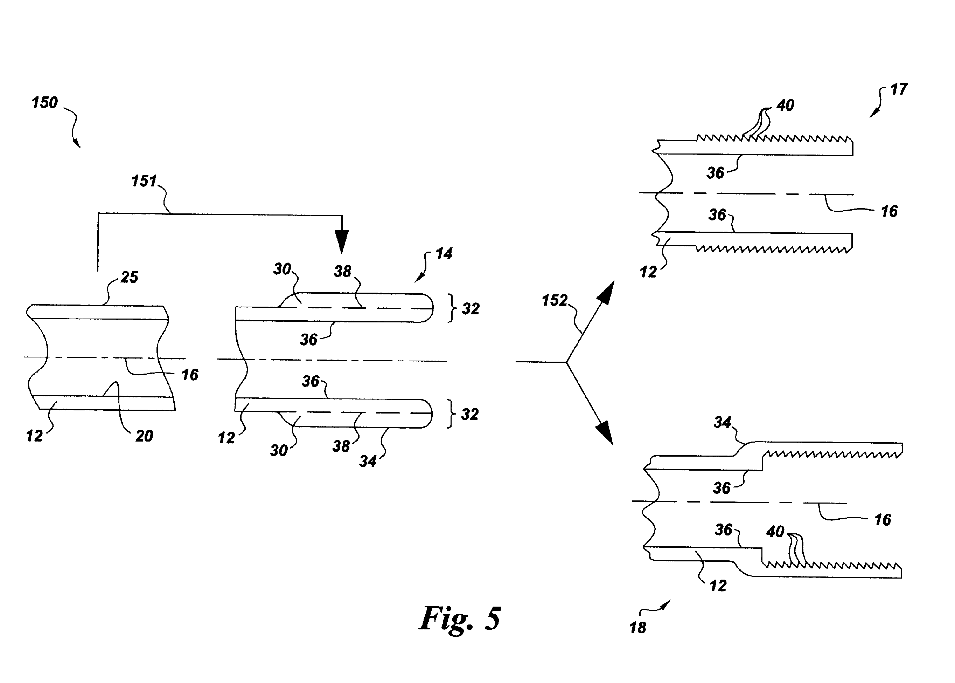

Referring to the drawings, FIG. 5 illustrates key concepts and embodiments of a method 150 of making the threaded metal pipe 10 provided by the present invention. In a first step 151, a conventional metal pipe 12 having a pipe inner surface 20, a pipe outer surface 25, and a pipe center axis 16 is subjected to a metal deposition process to provide a thickened metal pipe 14 comprising a metal sleeve layer 30 disposed on first end portion 26 of metal pipe 12. The metal pipe 12 and the metal sleeve layer 30 together comprise multilayer structure 32. In a second step 152, a plurality of pipe threads are inscribed into a surface of the multilayer structure to provide a threaded metal pipe of the invention comprising either a threaded pin coupling 17 or a threaded box coupling 18. In certain instances, it may be advantageous to provide a thickened metal pipe 14 comprising a multilayer structure 32 of sufficient strength and thickness that a plurality of pipe threads may be inscribed in both the outer surface of the multilayer structure 34 and the inner surface of the multilayer structure 36 to provide a threaded metal pipe 10 having a bi-functional coupling comprising both a threaded pin coupling 17 and threaded box coupling 18. Thus, in one embodiment, the present invention provides a threaded metal pipe 10 comprising a bi-functional coupling comprising both a threaded pin coupling 17 and threaded box coupling 18.

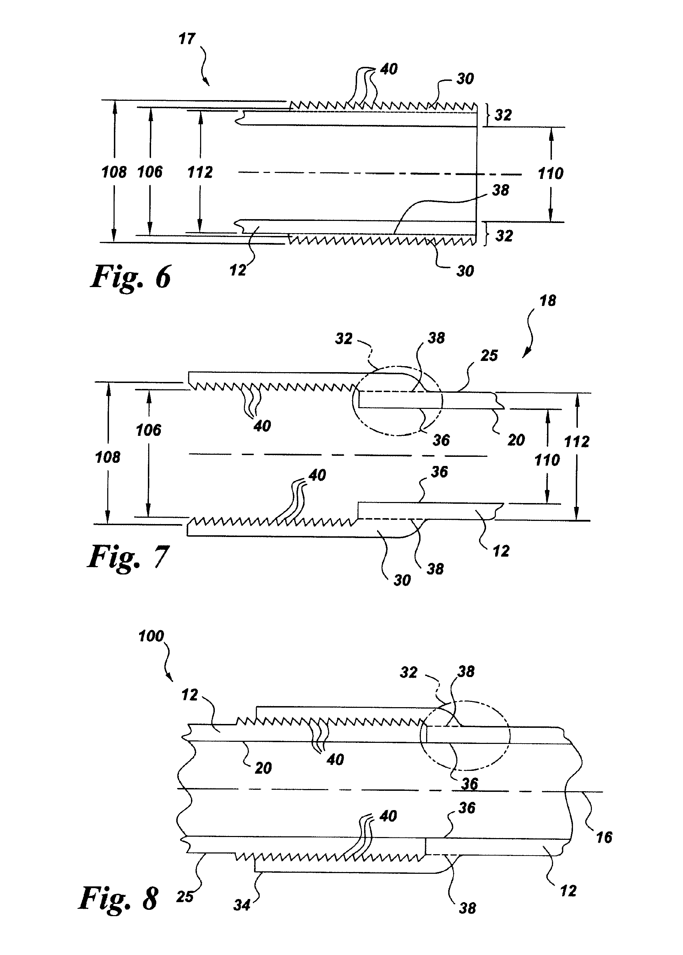

Referring to the drawings, FIG. 6 illustrates key concepts and embodiments of the present invention. The figure illustrates a threaded pin coupling 17 provided by the present invention, the threaded pin coupling comprising a metal pipe 12 having a pipe inner surface 20, a pipe outer surface 25 and a first end portion 26. The threaded pin coupling further comprises a metal sleeve layer 30 disposed upon the pipe outer surface of the first end portion of the metal pipe. The metal sleeve layer is secured to the pipe surface by a metallurgical bond 38. The first end portion 26 of the metal pipe 12 together with the metal sleeve layer 30 comprise a multilayer structure 32, the multilayer structure having an outer surface 34 and an inner surface 36. The multilayer structure 32 comprises a plurality of pipe threads 40 inscribed in at least a portion of the outer surface of the multilayer structure 34. The threaded pin coupling 17 is characterized by a minor diameter 106 and a major diameter 108.

Referring to the drawings, FIG. 7 illustrates key concepts and embodiments of the present invention. The figure illustrates a threaded box coupling 18 provided by the present invention, the threaded box coupling comprising a metal pipe 12 having a pipe inner surface 20, a pipe outer surface 25 and a first end portion 26. The threaded box coupling further comprises a metal sleeve layer 30 disposed upon the pipe outer surface of the first end portion of the metal pipe. The metal sleeve layer is secured to the pipe surface by a metallurgical bond 38. The first end portion 26 of the metal pipe 12 together with the metal sleeve layer 30 comprise a multilayer structure 32, the multilayer structure having an outer surface 34 and an inner surface 36. The multilayer structure 32 comprises a plurality of pipe threads 40 inscribed in at least a portion of the inner surface of the multilayer structure 34. In the embodiment shown the figure, substantially all of the metal pipe 12 originally present in that portion of the multilayer structure 32 into which the threads 40 have been inscribed has been removed. The threaded box coupling 18 is characterized by a minor diameter 106 and a major diameter 108.

Referring to the drawings, FIG. 8 illustrates key concepts and embodiments of the present invention. The figure illustrates a pipe connection 100 comprising a threaded pin coupling 17 provided by the present invention coupled with a threaded box coupling 18 provided by the present invention.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A threaded metal pipe comprising
a metal pipe having an inner surface, an outer surface, a first end portion and a second end portion;
a metal sleeve layer disposed on an outer surface of at least one of the first end portion and the second end portion, said metal sleeve layer and said end portion forming a multilayer structure having an inner surface and an outer surface; and
a plurality of pipe threads inscribed in at least a portion of the multilayer structure.

2. The threaded metal pipe according to claim 1, wherein said plurality of pipe threads are inscribed in at least a portion of the outer surface of the multilayer structure.

3. The threaded metal pipe according to claim 1 or claim 2, wherein said plurality of pipe threads are inscribed in at least a portion of the inner surface of said multilayer structure.

4. The threaded metal pipe according to any preceding claim, wherein said metal sleeve layer is prepared by a process comprising a metal deposition step.

5. The threaded metal pipe according to any preceding claim, wherein the metal sleeve layer is prepared by a process which comprises shrink fitting a metal sleeve onto the end of a metal pipe.

6. A petroleum production riser comprising:
at least one riser section comprising:
a metal pipe having an inner surface, an outer surface, a first end portion and a second end portion;
a metal sleeve layer disposed on an outer surface at least one of the first end portion and the second end portion, said metal sleeve layer and said end portion forming a multilayer structure having an inner surface and an outer surface; and
a plurality of pipe threads inscribed in at least a portion of the multilayer structure.

7. A threaded pin coupling comprising:
a first end portion of a metal pipe having an inner surface, and an outer surface;
a metal sleeve layer disposed on the outer surface of the first end portion, said metal sleeve layer and said end portion forming a multilayer structure having an inner surface and an outer surface; and
a plurality of pipe threads inscribed in at least a portion of the outer surface of the multilayer structure.

8. A threaded box coupling comprising:
a first end portion of a metal pipe having an inner surface, and an outer surface;
a metal sleeve layer disposed on the outer surface of the first end portion, said metal sleeve layer and said end portion forming a multilayer structure having an inner surface and an outer surface; and
a plurality of pipe threads inscribed in at least a portion of the inner surface of the multilayer structure.

9. A method of making a threaded metal pipe comprising:
(a) providing a metal pipe having an inner surface, an outer surface, a first end portion and a second end portion;
(a) disposing a metal sleeve layer on an outer surface at least one of the first end portion and the second end portion, said metal sleeve layer and said end portion forming a multilayer structure having an inner surface and an outer surface; and
(c) inscribing a plurality of pipe threads in at least a portion of the multilayer structure.

10. The method according to claim 9, wherein said disposing is carried out using a metal deposition process.
